# EUROPEAN PATENT APPLICATION

(11) **EP 1 776 868 A1**
(43) Date of publication of application: **25.04.2007**
(21) Application number: 06021903.7
(22) Date of filing: 19.10.2006
(51) Int. Cl.: A23D 9/00, C11C 5/00

(54) **Container candle with mottled appearance**

(30) Priority: 19.10.2005 US 728155 P
(71) Applicant: Blyth, Inc., Greenwich Connecticut 06831-5118 (US)
(72) Inventor: Burkhamer, Ronald, E., State Road, North Carolina 28676 (US); Gutkowski, Steven, M., Elkin, North Carolina 28621 (US)
(74) Representative: Jostarndt, Hans-Dieter

(57) **Abstract**

A mottled candle and its method of manufacture are disclosed herein. The candle includes a body of wax disposed in a rigid, non-flammable container, the container having at least one wall that is at least translucent. The body of wax conforms to the wall of the container and includes a pattially-hydrogenated tallow, a fatty component, and preferably paraffin and microcrystalline waxes. A wick is disposed in the body of wax.

## Description

### CROSS-REFERENCE TO RELATED APPLICATION

The benefit under 35 U.S.C. §119(e) of U.S. Provisional Patent Application Serial No. 60/728,155 filed October 19, 2005, is hereby claimed.

### BACKGROUND

### Field of the Disclosure

The disclosure relates generally to decorative and functional wax articles. More particularly, the disclosure relates to a container candle containing partially hydrogenated animal tallow and a fatty component, and having a unique mottled appearance.

### Brief Description of Related Technology

Container candles having a mottled appearance are typically made from fully-refined paraffin. The mottled appearance is desired by consumers, and often indicates a high loading of fragrance oils.

### SUMMARY

One aspect of the disclosure provides a candle including a body of wax a disposed in a rigid, non-flammable container, the container having at least one wall that is at least translucent, and the body of wax conforming to the wall of the container; and a wick disposed in the body of wax; wherein the wax includes a partially-hydrogenated tallow and a fatty component. The candle can be formulated to yield a mottled appearance.

Further aspects and advantages will be apparent to those of ordinary skill in the art from a review of the following detailed description, taken in conjunction with the drawings. While the candle is susceptible of embodiments in various forms, the description hereafter includes specific embodiments with the understanding that the disclosure is illustrative, and is not intended to limit the invention to the specific embodiments described herein.

### BRIEF DESCRIPTION OF THE DRAWINGS

For further facilitating the understanding of the present invention, two drawing figures are appended hereto.

Figure 1 shows an example of mottled candle, viewed from the outside through a glass container which contains the candle body.

Figure 2 shows an enlargement of the surface of the body of the candle of Figure 1, as viewed through the glass container.

### DETAILED DESCRIPTION

Formulation of the combustible candle content according to the disclosure herein can yield a candle with an outer surface having a mottled appearance. The candle is disposed in a container, and would not be suitable as a commercial free-standing candle due to thermal instability. The formulation provides the look of a traditional mottled candle, while using renewable resources.

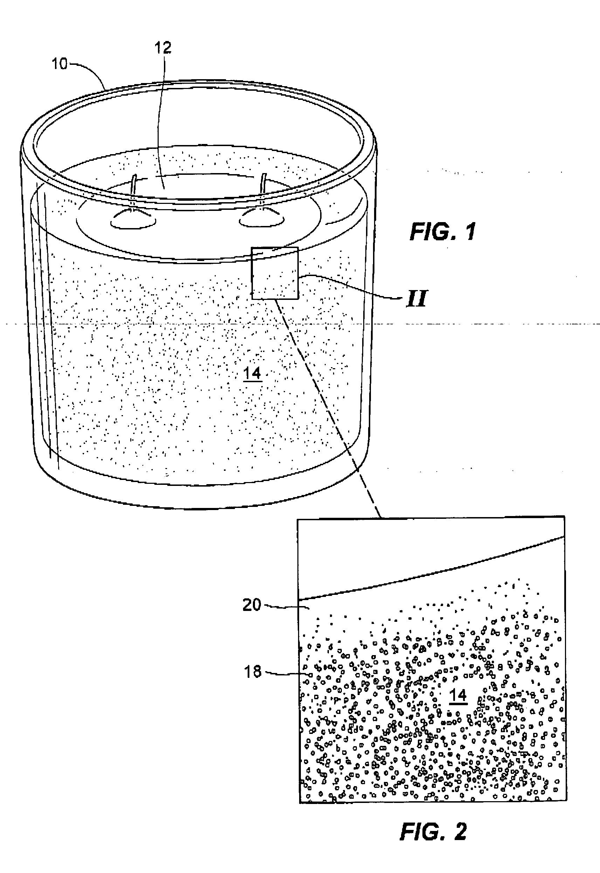

The outer surface of the candle is characterized by spots or blotches having different shades of color, or with different colors (*e.g.,* some having color and some being white). The appearance can also be described as fractured. The arrangement of the discontinuities in color or shade can be regular or irregular, and often is irregular. In prior art candles, the mottled appearance often resulted from high oil content, typically from fragrance oils, and indeed the exterior surface of the candle in contact with the container could be plagued with fragrance oil bleed. An illustration of an embodiment of a candle having a mottled appearance is shown in Figure 1, wherein element 10 is the glass container, element 12 is the candle, and element 14 is the visible surface of the candle. Figure 2 shows an enlarged view of the surface 14 to illustrate details of the particular type of mottled appearance in the candle of Figure 1, wherein elements 18 are spots of relatively darker shade of color and element 20 is a background of relatively lighter shade of color.

Due to the physical properties of the wax mixture, the body of wax is too thermally unstable to function as a free-standing candle, and thus is disposed within a container. If the candle is to be burned, then the container is preferably rigid and non-flammable. To take advantage of the unique mottled appearance provided by the formulation described herein, at least a portion of the container is at least translucent, more preferably transparent. Preferably, the entire container is transparent Further, to take advantage of the unique appearance of the candle the body of wax preferably conforms to an inside wall of the container. A particularly preferred container is made of clear, colorless, thick-walled glass, and it contains a body of wax which conforms to the interior wall as a result of pouring the wax mixture in molten form into the container and allowing the wax to cool.

The candle composition and method are contemplated to include embodiments consisting of or consisting essentially of partially-hydrogenated tallow and a fatty component, or also including any combination of one or more of the additional optional elements, features, and steps further described below, unless stated otherwise. The primary combustible content of the candle body includes a mixture of a tallow fuel and fatty component. Preferably, the candle also includes a paraffin and a microcrystalline wax. Various other optional additives are also described below.

The tallow is a solid wax derived by rendering animal fat, and it consists chiefly of triglycerides of palmitic, stearic, and oleic acids. Beef tallow is preferred. Whereas unrefined beef tallow has a high content of unsaturated components (iodine value (IV) of about 40-50), a preferred tallow for use in the candle described herein will be partially hydrogenated. The partially-hydrogenated tallow will have an iodine value of about 30 or less, preferably about 25 or less, about 22 or less, or about 20 or less. The preferred partially-hydrogenated tallow will have an iodine value of about 10 or greater, preferably about 15 or greater, for example about 18 or greater. The following specific ranges and values are also contemplated: about 10 to about 30, about 15 to about 25, and about 18 to about 22, and 20. The partially- hydrogenated tallow preferably is characterized by a titre in a range of 55 °C to 59 °C. The partially- hydrogenated tallow preferably has a melting point (Wiley) of about 55 °C.

To yield the mottled appearance, the candle preferably will include at least about 45 % by weight of partially-hydrogenated animal tallow, based on the weight of the candle (wt%). In refinements, the candle can include at least about 50 wt% of the tallow, at least about 55 wt% tallow, greater than 50 wt% tallow, at least about 59 wt% of the tallow, and at least about 60 wt% of the tallow. Generally the tallow will be present in an amount of about 65 wt% or 60 wt% or less. For example, in one type of embodiment, the animal tallow will be present in an amount at least 45 wt% and about 65 wt% or less. In another type of embodiment, the animal tallow will be present in a range from about 50 wt% to about 60 wt%. In another type of embodiment, the candle will include animal tallow in a range of about 55 wt% to about 60 wt%.

As the tallow iodine value decreases (degree of hydrogenation increases), the tallow becomes harder and it can absorb more oil, whereas as the tallow iodine value increases towards unrefined tallow, the tallow becomes softer.

Use of tallow can provide the candle with a mottled appearance without the high fragrance oil loads which would be required in a comparable paraffin candle. Accordingly, in one type of embodiment the candle has a low fragrance content, such as up to 5 wt%, less than 5 wt%, up to 3 wt%, or less than 3 wt%.

A fatty component can be used to aid in cohesion between the solid and liquid phases of the candle. The addition of a fatty component such as stearic acid can produce a dry candle without accumulation of fragrance oil on the surface. A fatty compound can also be used to aid in consumption of the candle, for example by creating a larger bum pool around the wick. The fatty component is preferably selected from one or more of a fatty acid, a fatty ester, and a fatty alcohol. The fatty component will preferably be characterized by a major proportion of the fatty component having a carbon chain length in the range C₁₄ to C₂₀, more preferably C₁₆ to C₁₈. Examples include, but are not limited to, stearic acid and methyl stearate.

The candle will preferably also include up to 15 wt% or 20 wt% of a paraffin, for example in a range of 5 wt% to 15 wt%. The paraffin can be a fully-refined or partially-refined petroleum product. In one embodiment, the paraffin will be a partially-refined petroleum having a high oil content (e.g., slack wax, scale wax, semi-refined paraffin, or a mixture thereof in any desired ratio). The partially-refined petroleum having high oil content will have at least 0.5 wt% oil or greater than 0.5 wt% oil, and is contemplated in embodiments to include at least 1 wt% oil, at least 2 wt% oil, or at least 3 wt% oil. The high oil content paraffin is also contemplated to include up to 40 wt% oil, or up to 15 wt% oil. The paraffin preferably has a molecular weight in a range of about 250 daltons (Da) to about 850 Da.

In one embodiment the partially-refined petroleum is a slack wax. Slack wax is a generic term for the mixture of wax and oil recovered in a petroleum dewaxing process. In one embodiment, the slack wax will have a free oil content of at least 2 wt%. In another embodiment, the free oil content will be at least 3 wt% or at least 5 wt%. The free oil content of the slack wax is preferably about 35 wt% or less, and in one type of embodiment will be 20 wt% or less. Suitable ranges of free oil include 2 wt% to 20 wt%, 10 wt% to 20 wt%, and 3 wt% to 20 wt%. The slack wax preferably has a melt point in a range of about 43 °C to about 66 °C, for example from 50 °C to about 53 °C. Slack wax generally can have a color in a range from white to brown, and is relatively soft. A suitable slack wax is available from ExxonMobil under the trade name PROWAX 310 petroleum slack wax.

In another embodiment, the partially-refined petroleum is a scale wax. Scale wax is a generic term for a partially-refined slack wax. In one embodiment, the scale wax will have a free oil content of at least 0.5 wt% or 1 wt%. In another embodiment, the free oil content will be at least 2 wt%. The free oil content of the scale wax is preferably about 5 wt% or less, and in one type of embodiment will be 3 wt% or less. The scale wax preferably has a melt point in a range of about 120 °F to about 140 °F (about 49 °C to about 60 °C). Scale wax generally can have a color in a range from white to yellow.

In another embodiment the partially-refined petroleum is a semi-refined paraffin wax. Semi-refined paraffin waxes can be hydrotreated or clay filtered slack waxes or scale waxes. In one embodiment, the semi-refined paraffin wax will have a free oil content of at least 0.5 wt% or 1 wt%. In another embodiment, the free oil content will be at least 2 wt%. The free oil content of the semi-refined paraffin wax is preferably about 5 wt% or less, and in one type of embodiment will be 3 wt% or less. The semi-refined paraffin wax preferably has a melt point in a range of about 120 °F to about 140 °F (about 49 °C to about 60 °C). Semi-refined paraffin waxes are generally white in color.

A preferred optional component is microcrystalline wax. The microcrystalline wax can function to bind free oil. The microcrystalline wax can have a melting point in a range of about 50 °C to about 95 °C, preferably 75 °C to 85 °C, more preferably about 71 °C to about 77 °C. The microcrystalline wax preferably has an oil content of 5 wt% or below, for example 2.5 wt%. The microcrystalline wax preferably has a penetration value (at 25 °C, needle, 0.1mm, ASTM D 1321) in a range of 15 to 20. The microcrystalline wax preferably has a kinematic viscosity (at 100 °C, ASTM D 445) in a range of 15 mm² to 20 mm². A suitable microcrystalline wax is available from ExxonMobil under the trade name WAXREX 3920. The microcrystalline wax is preferably present in an amount of at least 1 wt% and up to 5 wt%, for example in a range of 1 wt% to 5 wt%.

The candle can optionally include one or more additional fuels, preferably waxy fuels, in contents sufficient to yield 100% in view of the foregoing formulation guidelines. Such fuels can include, but are not limited to, vegetable waxes, mineral waxes, animal waxes, and synthetic waxes, including unrefined, partially-refined, and fully-refined derivatives thereof. Such fuels can be used to aid in bum or processing performance.

The candle can also include one or more other candle additives known in the art or developed for use in candles. For example, the candle can include one or more ingredients to provide the resulting article with decorative and/or functional properties. Examples include any number of solid or liquid additives known for use in candle making, including substituted fatty acids, alcohols, acid esters, stability additives, UV inhibitors, antioxidants, and combinations thereof. Suitable decorative ingredients include, but are not limited to, pigments, dyes, and non-wax particulates (e.g., glitter). For example, a colorant can be included in an amount up to 2 wt% in one type of embodiment. Suitable functional and active ingredients include, but are not limited to, fragrances, deodorants, insect repellents, animal attractants, sanitizing agents, or any other such compounds suitable for release from the article into the surrounding environment. For example, a functional and/or active ingredient can be included in an amount up to 15 wt% in one type of embodiment.

Table 1 below shows broad and narrow preferred ranges of ingredients for one type of mottled container candle according to the disclosure, as well as one specific formulation. All components are specified by percent weight based on the total weight of the candle mass (without wick).

**Table 1**

| Component or property | Broad | Narrow | Specific |
|---|---|---|---|
| Partially-Hydrogenated Tallow | 45-65 | 50-60 | 59 |
| Iodine Value of tallow | 10-30 | 18-22 | 20 |
| Fatty component | 25-45 | 30-40 | 35 |
| Carbon chain length | C₁₄-C₂₀ | C₁₆-C₁₈ | C₁₈ |
| Slack Wax | 0-20 | 5-15 | 5 |
| oil content of slack wax | 2%-40% | 3%-20% | 2.5% |
| Microcrystalline wax | 0-5 | 1-5 | 1 |

The candle can be made by a method including creating a molten mixture of the tallow, fatty component, and any optional ingredients according to the combinations and amounts described herein, by pouring the molten mixture into a suitable container, and then allowing the molten mixture to cool. Preferably, the pour temperature is in a range of 155 °F to 165 °F (about 68 °C to about 74 °C), and the mixture is poured into heated glass jars. Optionally, one or more additional steps of pouring additional molten mixture into the same container may be practiced. A wick can be provided in any manner. For example, a wick can be disposed in the container prior to pouring the molten mixture.

### EXAMPLES

The following examples are provided for illustration and are not intended to limit the scope of the invention.

### Example 1

Mottled candles were prepared according to the ratios of tallow and stearic acid in Table 2 below by the following procedure: blend 5 wt% PROWAX 310 petroleum slack wax, specified amount of tallow IV-20, specified amount of commercial stearic acid (containing approximately 55 wt% palmitic acid and 45 wt% stearic acid), and 1 wt% WAXREX 3920 microcrystalline wax to form a wax base, to the wax base add 0.5 % by weight based on the weight of the wax base of UV absorber and 3 % by weight based on the weight of the wax base of a fragrance oil to form the candle base. The candle base was poured at a temperature in a range of 155 °F to 165 °F (about 68 °C to about 74 °C) into heated glass jars. Shortly after a crust formed on top of the candle, a first topmelt of wax was poured over the wax in the jar, and prior to complete cool of the wax a second topmelt of wax was poured over the wax in the jar.

**Table 2**

| % Tallow IV-20 in Wax Base | % Stearic Acid in Wax Base | Appearance of Resulting Candle |
|---|---|---|
| 60 | 34 | Mottled, more crystalline |
| 59 | 35 | Mottled |
| 58 | 36 | Mottled |
| 57 | 37 | Mottled |
| 54 | 40 | Mottled |
| 50 | 44 | Somewhat frosty appearance with partial mottling |
| 47 | 47 | Frosty; little to no mottling |

It was observed that the increase in tallow across the ranges in Table 2 tended to provide a more crystalline appearance in the mottling. The degree of mottling in the candle having 47 wt% tallow and 47 wt% stearic acid could be increased by using a lower acid, such as palmitic acid or myristic acid.

The foregoing description is given for clearness of understanding only, and no unnecessary limitations should be understood therefrom, as modifications within the scope of the invention may be apparent to those having ordinary skill in the art.

Throughout the specification, where compositions are described as including components or materials, it is contemplated that the compositions can also consist essentially of, or consist of, any combination of the recited components or materials, unless described otherwise.

The practice of a method disclosed herein, and individual steps thereof, can be performed manually and/or with the aid of electronic equipment. Although processes have been described with reference to particular embodiments, a person of ordinary skill in the art will readily appreciate that other ways of performing the acts associated with the methods may be used. For example, the order of various steps may be changed without departing from the scope or spirit of the method, unless described otherwise. In addition, some of the individual steps can be combined, omitted, or further subdivided into additional steps.

## Claims

1. A candle, comprising:
a body of wax disposed in a rigid, non-flammable container, the container having at least one wall that is at least translucent, and the body of wax conforming to the wall of the container;
and a wick disposed in the body of wax;
wherein the wax comprises 45 wt% to 65 wt% partially-hydrogenaved animal tallow having an iodine value in a range of about 10 to about 30 and a fatty component selected from the group consisting of C₁₄-C₂₀ acids, C₁₄-C₂₀ esters, C₁₄-C₂₀ alcohols, and mixtures thereof, and wherein the wax has a mottled appearance.

2. The candle of claim 1, wherein the partially- hydrogenated tallow has an iodine value in a range of about 15 to about 25.

3. The candle of claim 2, wherein the partially- hydrogenated tallow has an iodine value in a range of about 18 to about 22.

4. The candle of claim 1, wherein the partially- hydrogenated tallow comprises beef tallow.

5. The candle of claim 1, wherein the wax comprises 5 wt% to 20 wt% of a paraffin and at least 1 wt% of a microcrystalline wax.

6. The candle of claim 2, wherein the paraffin comprises a partially-refined petroleum having at least 0.5 wt% oil.

7. The candle of claim 6, wherein the paraffin comprises a partially-refined petroleum having at least 1 wt% oil.

8. The candle of claim 7, wherein the paraffin comprises a partially-refined petroleum having up to 40 wt% oil.

9. The candle of claim 8, wherein the paraffin comprises a partially-refined petroleum having up to 15 wt% oil.

10. The candle of claim 5, wherein the microcrystalline wax is present in an amount up to 5 wt%.

11. The candle of claim 1, wherein the fatty component is present in an amount at least 25 wt%.

12. The candle of claim 11, wherein the fatty component is present in an amount in a range of 25 wt% to 45 wt%.

13. The candle of claim 1, wherein the fatty component comprises a member selected from the group consisting of C₁₄-C₂₀ acids and combinations thereof.

14. The candle of claim 11, wherein the fatty component comprises stearic acid.

15. The candle of claim 14, wherein the fatty component is present in an amount at least 25 wt%.

16. The candle of claim 15, wherein the fatty component is present in an amount up to 45 wt%.

17. The candle of claim 11, wherein the fatty component is present in an amount up to 45 wt%.

18. The candle of claim 1, comprising less than 5 wt% of a fragrance.

19. The candle of claim 18, comprising 3 wt% or less of a fragrance.
